# EUROPÄISCHE PATENTSCHRIFT

(11) **EP 1 930 711 B1**
(45) Veröffentlichungstag und Bekanntmachung des Hinweises auf die Patenterteilung: **25.04.2012**
(21) Anmeldenummer: 07023099.0
(22) Anmeldetag: 29.11.2007
(51) Int. Cl.: G01M 7/00, G01M 17/007, B64F 5/00

(54) **Verfahren zur Gewinnung von Daten für die Zulassung eines Luftfahrzeugs**
Method of gathering data for authorising aircraft
Procédé d'obtention de données pour l'immatriculation d'un avion

(30) Priorität: 08.12.2006 DE 102006057888
(43) Veröffentlichungstag der Anmeldung: 11.06.2008
(73) Patentinhaber: Deutsches Zentrum für Luft- und Raumfahrt e.V., 51147 Köln (DE)
(72) Erfinder: Dietz, Guido, Dr.-Ing., 50678 Köln (DE); Göge, Dennis, Dr.-Ing., 92201 Seuilly-sur-Seine (FR); Böswald, Marc, Dr.-Ing., 34323 Mosheim (DE); Govers, Yves, 30073 Göttingen (DE)
(74) Vertreter: Rehberg Hüppe + Partner

(56) Entgegenhaltungen:
- FÜLLEKRUG, U.; GLOTH, G.; DEGENER, M.; LUBRINA, P.: "Ground Vibration Tests on Airbus A380-800"[Online] 7. April 2005 (2005-04-07), XP002545762 Aerospace Testing Expo 2005 Europe - Open Technology Forum, Hamburg, Germany Gefunden im Internet: URL:http://www.ukintpress-conferences.com/ conf/aero05/pres/OT/fuellekrug.pdf> [gefunden am 2009-09-15]
- YADAV D., KAMLE S.; TALUKDAR S.: "Non-stationary response of a variable section flexible wing aircraft over uneven elastic track" JOURNAL OF SOUND AND VIBRATION, Bd. 210, Nr. 1, 1998, Seiten 117-135, XP002545763

## Beschreibung

### TECHNISCHES GEBIET DER ERFINDUNG

Die Erfindung bezieht sich auf ein Verfahren zur Gewinnung von Daten für die Zulassung eines Luftfahrzeugs mit den Merkmalen des Oberbegriffs des Patentanspruchs 1.

Statt der Bezeichnung Luftfahrzeug wird im Folgenden teilweise auch die Bezeichnung Flugzeug verwendet, wobei die Bedeutungen der beiden Begriffe hier als übereinstimmend anzusehen sind. Speziell sind mit beiden Begriffen hier flugfähige Objekte gemeint, die über ein Fahrwerk verfügen, mit dem sie auf dem Boden, insbesondere einer Rollbahn rollen können. Dies schließt grundsätzlich Drehflügler mit ein. Insbesondere bezieht sich die vorliegende Erfindung aber auf Verfahren zur Gewinnung von Daten für die Zulassung von Luftfahrzeugen mit starren oder allenfalls teilweise verschwenkbaren Flügelanordnungen. Im ganz besonderen Fokus stehen dabei so genannte Großraumflugzeuge.

### STAND DER TECHNIK

Im Rahmen der Zulassung eines Flugzeugs muss für seinen Betriebsbereich nachgewiesen werden, dass kein Flattern auftreten kann und ein sicherer Betrieb des Flugzeugs gewährleistet ist. Die hierfür erforderlichen Flatterstabilitätsanalysen werden auf der Basis von Modaldaten durchgeführt, die die strukturdynamischen Eigenschaften einer Flugzeugstruktur des Flugzeugs im relevanten Frequenzbereich beschreiben. Als Modaldaten werden in diesem Zusammenhang Eigenfrequenzen, Eigenformen, modale Dämpfungsmaße und modale Massen verstanden. Die Modaldaten können entweder direkt in einem so genannten Standschwingungsversuch gemessen oder mit der numerischen Analyse eines Finite Elemente (FE)-Modells der Flugzeugstruktur bestimmt werden.

Bei der Zulassung moderner Großraumflugzeuge wird die Flatterstabilitätsanalyse in der Regel auf Basis eines solchen FE-Modells durchgeführt. Die Verwendung dieses analytischen Modells wird im Rahmen von Flatterzertifizierungsprozessen von Großraumflugzeugen gegenüber der direkten Verwendung gemessener Modaldaten bevorzugt, da ein analytisches Modell eine größere Flexibilität bietet, um auf strukturelle Änderungen der Flugzeugkonstruktion, z. B. im Rahmen von Variantenkonstruktionen in einer Flugzeugfamilie, oder auf unterschiedliche Massenverteilungen aufgrund von Beladungs- oder Betankungszuständen eingehen zu können. Voraussetzung hierfür ist jedoch ein validiertes FE-Modell der Flugzeugstruktur.

Zur Validierung von FE-Modellen von Flugzeugstrukturen werden bisher die experimentellen Modaldaten aus Standschwingungsversuchen verwendet. Die Güte des jeweiligen FE-Modells wird dabei anhand der Abweichungen bewertet, die zwischen realen gemessenen Modaldaten und analytischen Modaldaten, die mit Hilfe des FE-Modells simuliert wurden, auftreten. Sind die Abweichungen hinreichend klein, gilt das FE-Modell als validiert. Bei größeren Abweichungen wird das FE-Modell so angepasst, dass die Abweichungen hinreichend klein werden. Bei diesem Vorgang spricht man vom FE Model Updating.

Ein Standschwingungsversuch an einem Großraumflugzeug ist extrem zeit- und kostenaufwändig. Bei einem solchen Standschwingungsversuch, der auch als Ground Vibration Test (GVT) bezeichnet wird, wird die Flugzeugstruktur mit gezielt platzierten Aktuatoren zu Schwingungen angeregt. Die Schwingungen der Flugzeugstruktur werden mit einzelnen Beschleunigungssensoren erfasst. Mit Hilfe der Modalanalyse werden aus den Messwerten der Beschleunigungssensoren die strukturdynamischen Eigenschaften Eigenfrequenzen, Eigenformen, modale Dämpfungsmaße und modale Massen bestimmt. Üblicherweise werden zur Modalanalyse Übertragungsfunktionen verwendet, z. B. zwischen Kräften als Referenz oder Eingang in das System und Beschleunigungen als Antworten oder Ausgang des Systems. Die daraus gewonnenen Modaldaten werden dann für das Validieren bzw. Anpassen eines FE-Modells des Flugzeugs genutzt. Der Zeit- und Materialaufwand für Standschwingungsversuche an Großraumflugzeugen ist nicht nur deshalb groß, weil hierfür typischerweise eine Vielzahl von Beschleunigungssensoren angebracht und verkabelt werden muss. Auch die eigentlichen Messungen sind sehr zeitaufwändig. Da Standschwingungsversuche typischerweise erst kurz vor dem Erstflug eines neuen Flugzeugmusters durchgeführt werden und Flugzeughersteller sehr bestrebt sind, den Erstflug aufgrund seiner öffentlichen Wirkung termingereicht umzusetzen, wären jegliche Zeiteinsparungen, die hier realisiert werden können, sehr willkommen.

Neben Standschwingungsversuchen sind zur Gewinnung von Daten für die Zulassung von Flugzeugen Rolltestes für die Qualifikation der Fahrwerke des Flugzeugs und ihrer Aufhängung üblich. Ziel dieser Rolltests ist die Überprüfung und Qualifikation der Fahrwerke und der Triebwerke einschließlich Ihrer Aufhängungen. Weitere Zielsetzungen werden mit Rolltests im Rahmen der Gewinnung von Daten für die Zulassung eines Flugzeugs derzeit nicht verfolgt.

Aus der DE 101 54 337 A1 ist es bekannt, elastische globale Bewegungsformen von Kraftfahrzeugen im Fahrbetrieb zu bestimmen. Hierzu werden Schwingungen, die an dem Fahrzeug oder Teilen davon während der Fahrt über unebenen Untergrund auftreten gemessen, und die Messdaten werden einer Signalanalyse auf dem Ansatz der Modalanalyse unter Annahme einer Anzahl von globalen Bewegungsformen unterworfen.

Aus der EP 1 250 579 B1 ist ein Verfahren zur Schwingungsanalyse bekannt, das als Output-Only-Modalanalyse bezeichnet wird. Im Gegensatz zu einer üblichen Modalanalyse auf Basis von Übertragungsfunktionen zwischen einem Eingang in das System und einem Ausgang des Systems wird hierbei der Modalanalyse nur der Ausgang des Systems zugrunde gelegt. Als Eingang in das System wird dabei ein weißes Rauschen angenommen.

Aus der DE 42 40 600 C1 ist ein Verfahren zum Erkennen und Bewerten von Strukturschwächen von Flugzeugen bekannt, bei dem ein Finite-Elemente-(FE-)Modell einer Flugzeugstruktur des Flugzeugs aufgestellt wird und bei dem Schwingungsversuche zur Validierung des FE-Modells durchgeführt werden, in denen die Flugzeugstruktur mittels Erregersignale von einem Generator zu Schwingungen angeregt wird und die angeregten Schwingungen der Flugzeugstruktur erfasst werden. Dabei werden aus dem Finite-Elemente-Modell der Flugzeugstruktur Schwingungsformen berechnet, die als Referenz-Schwingungsformen dienen. Diese werden mit Schwingungsformen verglichen, die bei einer Modal-Analyse der Flugzeugstruktur gewonnen werden, und bei Abweichungen zwischen den Schwingungsformen wird das Finite-Elemente-Modell angepasst.

Aus der DE 101 54 337 A1 ist ein Verfahren zur Objektivierung der dynamischen Eigenschaften eines Kraftfahrzeugs bekannt, bei dem während einer Fahrt des Kraftfahrzeugs auftretende Schwingungen an dem Fahrzeug oder an Teilen davon messtechnisch als Messdaten aufgezeichnet werden und die Messdaten einer Signalanalyse unterworfen werden, bei der einzelne räumliche Komponenten der Schwingungen aus den Messdaten rechnerisch extrahiert werden. Auf diese Weise können verschiedene Schwingungsformen voneinander unterschieden werden. Werden dann bei einer ausgewogenen Abstimmung der einflussnehmenden Komponenten, wie z. B. Fahrwerk und Karosserie, zur Erzielung eines hohen Fahrkomforts berücksichtigt.

Aus der US 6,619,127 B2 ist eine Vorrichtung für Standschwingungsversuche bekannt, bei der die zu testende Struktur an einem Hebemechanismus pendelnd gelagert wird. Durch weiche Ausbildung des Hebemechanismus soll dafür gesorgt werden, dass die modalen Daten der abstützenden Struktur deutlich unterhalb der modalen Daten der zu testenden Struktur liegen, bei der es sich um ein Flugzeug handeln kann.

Aus der EP 0 299 436 B1 ist eine Vorrichtung zum Anregen von Flatterzuständen bei einem Luftfahrzeug bekannt, die einen rotierenden Zylinder mit zwei Luftaustrittsschlitzen aufweist, um durch die ausströmende Luft die interessierenden Flatterzustände strömungsdynamisch anzuregen.

Aus dem Dokument "Non-Stationary response of a variable section flexible wing aircraft ores unever elastic track", Yadav et al., Journal of Sound and Vibration (1998), 210(1), 117-135, ist es bekannt, durch Bodenunebenheiten reduzierte Schwingungen eines Luftfahrzeugs zu modellieren.

### AUFGABE DER ERFINDUNG

Der Erfindung liegt die Aufgabe zugrunde, ein Verfahren zur Gewinnung von Daten für die Zulassung eines Luftfahrzeugs mit den Merkmalen des Oberbegriffs des Patentanspruchs 1 aufzuzeigen, bei dem der für die Validierung des FE-Modells der Flugzeugstruktur betriebene Aufwand deutlich reduziert ist.

### LÖSUNG

Die Aufgabe der Erfindung wird durch ein Verfahren mit den Merkmalen des Patentanspruchs 1 gelöst. Bevorzugte Ausführungsbeispiele des neuen Verfahrens sind in den abhängigen Patentansprüchen 2 bis 7 definiert.

### BESCHREIBUNG DER ERFINDUNG

Bei dem neuen Verfahren wird zumindest ein Teil der Schwingungsversuche zur Validierung des FE-Modells im Rahmen der Rolltestes durchgeführt, wobei die Flugzeugstruktur durch Rollen der Fahrwerke über Bodenunebenheiten zu Schwingungen angeregt wird. Indem zumindest einen Teil der Schwingungsversuche im Rahmen der Rolltests durchgeführt wird, wird der zusätzliche Zeitaufwand für die Schwingungsversuche reduziert, da die Rolltests und die für Sie verbrauchte Zeit sowieso anfallen.

Es ist sogar so, dass alle Schwingungsversuche zur Validierung des FE-Modells einer Flugzeugstruktur im Rahmen von Rolltests durchgeführt werden können. Hierdurch mag sich der zeitliche Aufwand für die Rolltests erhöhen. Da aber gleichzeitig auf einen Standschwingungsversuch ganz verzichtet werden kann, ergeben sich trotzdem ganz erhebliche zeitliche Einsparungen.

Bei den Schwingungsversuchen kann eine übliche Input-/Outputmodalanalyse unter Verwendung von Fahrwerklast- und Deformationswerten vorgenommen werden, die mit für die Rolltests benötigten Sensoren gemessen werden. Auch bei derzeitigen Rolltests werden schon Sensoren an den Fahrwerken eingesetzt, die zur Bestimmung des Eingangs in die Flugzeugstruktur grundsätzlich geeignet sind. Selbst wenn für die Umsetzung des neuen Verfahrens hier zusätzliche Sensoren eingesetzt werden, um umfangreichere Daten für den Eingang in die Flugzeugstruktur zu gewinnen, ist dies verglichen mit dem eingesparten Standschwingungsversuch ein immer noch kleiner Aufwand.

Zudem ist es bei dem neuen Verfahren auch möglich, die Schwingungsversuche in Form einer Output-Only-Modalanalyse auszuwerten.

Um die Voraussetzungen für die Anwendung einer Output-Only-Modalanalyse zu schaffen, aber auch um sicherzustellen, dass alle relevanten Eigenschwingungsformen der Flugzeugstruktur im Rahmen der Rolltests angeregt werden, können die Fahrwerke für die Schwingungsversuche über Fahrbahnen mit definierten Unebenheiten gerollt werden. Diese definierten Unebenheiten können z. B. aus periodischen Welligkeiten fester Amplitude, einer statistischen Rauhigkeit oder einzelnen Höhensprüngen bestehen.

Den Ausgang der Flugzeugstruktur, d. h. die angeregten Schwingungen können zumindest zum Teil mit Beschleunigungssensoren an der Flugzeugstruktur erfasst werden, die auch in sich anschließenden Flugversuchen eingesetzt werden. Auch in soweit erfolgt also eine Mehrfachnutzung von Sensoren.

Insbesondere dann, wenn zur Erfassung der angeregten Schwingungen bei dem neuen Verfahren zusätzliche Beschleunigungssensoren verwendet werden, ist es bevorzugt, wenn diese telemetrisch abgefragt werden. Eine weitere bevorzugte Möglichkeit ist es, die angeregten Schwingungen über optische Verfahren zu erfassen. Dabei können die optischen Verfahren sowohl Flugzeug-gestützt, als auch Boden-gestützt sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand konkreter Ausführungsbeispiele unter Bezugnahme auf die beiliegende Zeichnung näher erläutert und beschrieben.

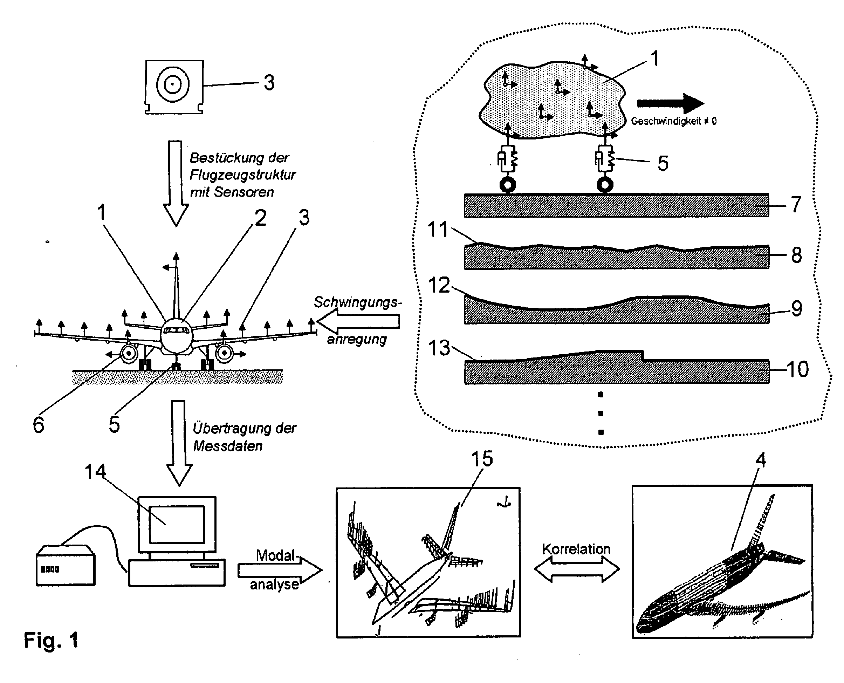

- **Fig. 1**: skizziert das Konzept des neuen Verfahrens zur Gewinnung von Daten für die Zulassung eines Luftfahrzeugs.

### BESCHREIBUNG EINES AUSFÜHRUNGSBEISPIELS

An der Flugzeugstruktur 1 eines Prototypen eines Flugzeugs 2 wird eine Vielzahl von Beschleunigungssensoren 3 angebracht. Die Beschleunigungssensoren 3 werden dabei zum Teil in Positionen angebracht, in denen sie für spätere Flugversuche des Flugzeugs 2 benötigt werden. Weitere Beschleunigungssensoren 3 werden dort angebracht, wo sich aufgrund der räumlichen Verteilung der zusätzlichen Messstellen eine hinreichend gute räumliche Auflösung, d.h. Beobachtbarkeit, der angeregten Eigenformen ergibt. Bei der Auswahl der zusätzlichen Messstellen sollte auch auf eine gute Unterscheidbarkeit der angeregten Eigenformen im Sinne der linearen Unabhängigkeiten (so genanntes Modal Assurance Criterion) der zu messenden Eigenvektoren geachtet werden. Im Rahmen von Rolltests, die originär zur Qualifikation von Fahrwerken 5 des Flugzeugs 2 dienen und in denen auch Triebwerke 6 des Flugzeugs getestet werden, wird das Flugzeug 2 mit seinen Fahrwerken 5 über unterschiedliche Fahrbahnen 7 bis 10 gerollt. Dabei weisen die Fahrbahnen 8 bis 10 Bodenunebenheiten 11 bis 13 auf. In Betracht gezogen werden auch unterschiedliche Bodenunebenheiten für die einzelnen Teile des Fahrwerks 5, um korrelierte Erregerkraftsignale bei der Analyse mit Input-Output-Modalanalyseverfahren zu vermeiden. Als Input werden die Signale von Lastsensoren am Fahrwerk verwendet, die z. B. Deformationen des Fahrwerks 5 messen und in äquivalente Kraftsignale umgerechnet werden können. Bei den Bodenunebenheiten 11 handelt es sich um eine statistische Rauhigkeit. Die Bodenunebenheit 12 ist eine Welligkeit, und die Bodenunebenheit 13 ist ein Höhensprung. Fahren des Fahrwerks 5 über Bodenunebenheiten 11 bis 13 regt die Flugzeugstruktur 1 zu Schwingungen an, die mit den Beschleunigungssensoren 3 erfasst werden. Hierbei handelt es sich um einen Ausgang der Flugzeugstruktur 1, der im Sinne einer Output-Only-Modalanalyse bei Annahme eines breitbandigen Erregerkraftspektrums, welches alle Eigenformen im interessierenden Frequenzbereich hinreichend gut abdeckt. als Eingang zur Modalanalyse der Flugzeugstruktur 1 genutzt werden kann. An den Fahrwerken 5 können jedoch auch Lastaufnehmer vorgesehen sein, die die Anregung der Flugzeugstruktur 1 durch die Bodenunebenheiten 11 bis 13 im Sinne eines Eingangs in die Flugzeugstruktur 1 erfassen. Die Messwerte von den Beschleunigungsaufnehmern 3 und etwaigen Lastaufnehmern an den Fahrwerken 5 werden von einem im Flugzeug 2 installierten Datenerfassungs- und Datenauswerturigssystem 14 erfasst und per Telemetrie zu einem bodengestützten Datenauswertungssystem 14 übertragen. Dort erfolgt die Auswertung der Daten im Sinne einer experimentellen Modalanalyse zur Bestimmung von Eigenformen 15 und weiterer modaler Daten der Flugzeugstruktur 1. Alternativ dazu ist die Installation eines Datenerfassungs- und Datenauswertungssystems im Flugzeug 2 möglich, wobei dann die Auswertung der Messdaten im Flugzeug selbst vorgenommen wird, wodurch die Verwendung einer Telemetrieanlage entfallen kann. Hiermit wird ein FE-Modell 4 der Flugzeugstruktur 1, soweit es noch andere Modaldaten ergibt, angepasst, bis es die Flugzeugstruktur 1 mit hinreichender Genauigkeit abbildet. Das auf diese Weise validierte FE-Modell 4 der Flugzeugstruktur 1 kann dann in einer Flatterstabilitätsanalyse des Flugzeugs 2 verwendet werden, um dessen Flatterstabilität in seinen vorgesehenen Betriebsbereichen nachzuweisen.

### BEZUGSZEICHENLISTE

- 1: Flugzeugstruktur
- 2: Flugzeug
- 3: Beschleunigungssensor
- 4: FE-Modell mit graphisch dargestellter numerisch ermittelter Eigenform
- 5: Fahrwerk
- 6: Triebwerk
- 7: Fahrbahn
- 8: Fahrbahn
- 9: Fahrbahn
- 10: Fahrbahn
- 11: Bodenunebenheit
- 12: Bodenunebenheit
- 13: Bodenunebenheit
- 14: Datenerfassung- und Datenauswertungssystem
- 15: Graphisch dargestellte experimentell ermittelte Eigenform

## Patentansprüche

1. Verfahren zur Gewinnung von Daten für die Zulassung eines Luftfahrzeugs, bei dem
- ein Finite-Elemente (FE-) Modell einer Flugzeugstruktur des Luftfahrzeugs aufgestellt wird,
- Schwingungsversuche zur Validierung des FE-Modells durchgeführt werden, bei denen die Flugzeugstruktur zu Schwingungen angeregt wird und die angeregten Schwingungen der Flugzeugstruktur erfasst werden,
- auf Basis des validierten FE-Modells eine Flatterstabilitätsanalyse der Flugzeugstruktur vorgenommen wird und
- Rolltests für die Qualifikation von Fahrwerken des Luftfahrzeugs durchgeführt werden,
**dadurch gekennzeichnet, dass** zumindest ein Teil der Schwingungsversuche zur Validierung des FE-Modells im Rahmen der Rolltests durchgeführt wird, wobei die Flugzeugstruktur (1) durch Rollen der Fahrwerke (5) über Bodenunebenheiten (11-13) zu messbaren und auswertbaren Schwingungen angeregt wird.

2. Verfahren nach Anspruch 1, **dadurch gekennzeichnet, dass** alle Schwingungsversuche zur Validierung des FE-Modells im Rahmen der Rolltests durchgeführt werden.

3. Verfahren nach Anspruch 1 oder 2, **dadurch gekennzeichnet dass** bei den Schwingungsversuchen eine Input/Output Modalanalyse unter Verwendung von Fahrwerkslast- und Deformationswerten vorgenommen wird, die mit für die Rolltests benötigten Sensoren gemessen werden.

4. Verfahren nach Anspruch 1 oder 2, **dadurch gekennzeichnet, dass** bei den Schwingungsversuchen eine Output-Only Modalanalyse vorgenommen wird.

5. Verfahren nach einem der Ansprüche 1 bis 4, **dadurch gekennzeichnet, dass** die Fahrwerke für die Schwingungsversuche über Fahrbahnen (8-10) mit definierten Unebenheiten (11-13) gerollt werden.

6. Verfahren nach einem der Ansprüche 1 bis 5, **dadurch gekennzeichnet, dass** die angeregten Schwingungen bei den Schwingungsversuchen zumindest zum Teil mit Beschleunigungssensoren (3) an der Flugzeugstruktur (1) erfasst werden, die auch in sich anschließenden Flugversuchen verwendet werden.

7. Verfahren nach einem der Ansprüche 1 bis 6, **dadurch gekennzeichnet, dass** die angeregten Schwingungen bei den Schwingungsversuchen zumindest zum Teil mit telemetrisch abgefragten Beschleunigungssensoren (3) an der Flugzeugstruktur (1) erfasst werden.

8. Verfahren nach einem der Ansprüche 1 bis 7, **dadurch gekennzeichnet, dass** die angeregten Schwingungen bei den Schwingungsversuchen zumindest zum Teil über Flugzeuggestützte oder Boden-gestützte optische Verfahren erfasst werden.

## Claims

1. Method of gathering data for the authorization of an aircraft, wherein
- a finite elements (FE) model of an airplane structure of the aircraft is set up,
- vibration tests for validating the FE model are carried out in which the airplane structure is exited for vibrations and in which the exited vibrations of the aircraft structures are monitored,
- a buffeting stability analysis of the airplane structure is made on basis of the validated FE model, and rolling tests for the qualification of landing gears of the aircraft are carried out,
**characterised in that** at least a part of the vibration tests for validating the FE model are carried out within the rolling tests, wherein the airplane structure (1) is excited for measurable and evaluable vibrations by rolling of the landing gears (5) over ground unevennesses (11 to 13).

2. Method of claim 1, **characterised in that** all vibration tests for validating the FE model are carried out within the rolling tests.

3. Method of claim 1 or 2, **characterised in that**, in the vibration tests, an input/output-modal analysis is made using landing gear load and deformation values which are measured by sensors needed for the rolling tests.

4. Method of claim 1 or 2, **characterised in that**, in the vibration tests, an output only modal analysis is made.

5. Method of any of the claims 1 to 4, **characterised in that** the landing gears are rolled over runways (8 to 10) comprising defined unevennesses for the vibration tests.

6. Method of any of the claims 1 to 5, **characterised in that** the excited vibrations in the vibration tests are at least partially monitored by acceleration sensors (3) at the airplane structure (1) which are also used in successive flight tests.

7. Method of any of the claims 1 to 6, **characterised in that** the excited vibrations in the vibration tests are at least partially monitored by telemetrically sampled acceleration sensors (3) on the airplane structure (1).

8. Method of any of the claims 1 to 7, **characterised in that** the excited vibrations in the vibration tests are at least partially monitored via airplane based or ground based optical methods.

## Revendications

1. Procédé destiné à obtenir des données pour l'immatriculation d'un aéronef, dans lequel
- un modèle d'éléments finis (FE) d'une structure d'avion de l'aéronef est mis en place,
- des essais de vibration sont effectués pour valider le modèle FE, lors desquels la structure de l'avion est excitée pour obtenir des vibrations et les vibrations excitées de la structure d'avion sont enregistrées,
- une analyse de stabilité de vacillement de la structure de l'avion est effectuée sur la base du modèle FE validé et
- des tests de roulement sont effectués pour la qualification de trains de roulement de l'aéronef,
**caractérisé en ce qu'**au moins une partie des essais de vibration est effectuée pour valider le modèle FE dans le cadre des tests de roulement, la structure d'avion (1) étant excitée par roulement des trains de roulement (5) au-dessus d'aspérités du sol (11-13) pour obtenir des vibrations mesurables et exploitables.

2. Procédé selon la revendication 1, **caractérisé en ce que** tous les essais de vibration sont effectués dans le cadre des tests de roulement pour la validation du modèle FE.

3. Procédé selon la revendication 1 ou 2, **caractérisé en ce que**, lors des essais de vibration, une analyse modale input/output est effectuée en utilisant des valeurs de charge de train de roulement et des valeurs de déformation qui sont mesurées avec des capteurs utilisés pour les test de roulement.

4. Procédé selon la revendication 1 ou 2, **caractérisé en ce que**, lors des essais de vibration, une analyse modale output-only est effectuée.

5. Procédé pour les essais de vibration selon l'une des revendications 1 à 4, **caractérisé en ce que** les trains de roulement font l'objet de roulement sur des chaussées (8-10) présentant des aspérités définies (11-13) pour les essais de vibration.

6. Procédé selon l'une des revendications 1 à 5, **caractérisé en ce que** les vibrations excitées sont détectées lors des essais de vibration au moins en partie avec des capteurs d'accélération (3) sur la structure d'avion (1), qui sont utilisés également lors des essais en vol consécutifs.

7. Procédé selon l'une des revendications 1 à 6, **caractérisé en ce que** les vibrations obtenues par excitation sont enregistrées lors des essais de vibration au moins en partie avec des capteurs d'accélération (3) interrogés par télémétrie sur la structure d'avion (1).

8. Procédé selon l'une des revendications 1 à 7, **caractérisé en ce que** les vibrations obtenues par excitation sont enregistrées lors des essais de vibration au moins en partie au moyen de procédés optiques mis en oeuvre en avion ou au sol.
